# EUROPEAN PATENT SPECIFICATION

(11) **EP 3 568 366 B1**
(45) Date of publication and mention of the grant of the patent: **23.12.2020**
(21) Application number: 18704080.3
(22) Date of filing: 15.01.2018
(51) Int. Cl.: B65G 59/02, B65G 61/00, B65H 3/02

(54) **SYSTEM AND METHOD FOR FEEDING DIAPHRAGM**
SYSTEM UND VERFAHREN ZUR MEMBRANBESCHICKUNG
SYSTÈME ET PROCÉDÉ D'ALIMENTATION DE DIAPHRAGME

(30) Priority: 16.01.2017 CN 201710033888
(43) Date of publication of application: 20.11.2019
(73) Proprietor: Tyco Electronics (Shanghai) Co. Ltd., Shanghai (CN); Measurement Specialties (China) Ltd., Shenzhen, Guangdong 518057 (CN); Innogetic Technology Co., Ltd., Zhuhai, Guangdong (CN)
(72) Inventor: DENG, Yingcong, Shanghai (CN); LIAO, Ziqing, Shanghai (CN); NING, Ke, Shanghai (CN); ZHANG, Dandan, Shanghai (CN); HU, Lvhai, Shanghai (CN); WONG, Kok Wai, Shanghai (CN)
(74) Representative: Grünecker Patent- und Rechtsanwälte PartG mbB
(86) International application number: PCT/IB2018/050239
(87) International publication number: WO 2018/131000

(56) References cited:
- EP-A2- 0 951 968
- EP-A2- 2 177 326
- US-A- 3 768 675
- US-A- 4 453 873
- US-A- 4 988 264
- US-A1- 2003 155 701

## Description

### CROSS-REFERENCE TO RELATED APPLICATION

This application claims the benefit of Chinese Patent Application No.201710033888.2 filed on January 16, 2017 in the State Intellectual Property Office of China.

### BACKGROUND OF THE INVENTION

### Field of the Invention

Embodiments of the present disclosure relate to a system and method for feeding diaphragm.

### Description of the Related Art

Diaphragms in electronic industry generally are formed as very thin metal pieces. During manufacturing and selling, diaphragms usually are stacked together, and placed and sold in stacks. As a result, when using the diaphragm, it is necessary to separate a single diaphragm from stacks of diaphragms. However, the diaphragms are easy to be damaged or fold since they are very thin, and thus separation of diaphragms with high efficiency and quality is a challenging process.

In the prior art, there are no such devices adapted to separate a signal diaphragm from stacks of diaphragms with high efficiency and quality. Instead, a single diaphragm, in the prior art, is manually separated from stacks of diaphragms, which undoubtedly lowers separation efficiency of the diaphragm, is easy to damage the diaphragm and reduces the diaphragm quality.

From EP 0 951 968 A2, an article picking apparatus is known, this document discloses a system suitable for feeding diaphragm according to the preamble of claim 1. The apparatus uses an oscillating plate for separating articles, such as bowls, a visual sensor for searching and identifying an article to pick up, and a robotic hand for picking up the article.

### SUMMARY OF THE INVENTION

An objective of the present disclosure is to solve at least one aspect of the above mentioned problems and disadvantages occurred in the prior art.

At least one embodiment of the present disclosure provides a system for feeding diaphragm which may separate a single diaphragm from stacks of diaphragms with high efficiency and quality.

According to the invention, there is provided a system for feeding diaphragm, comprising: a diaphragm separating device adapted to separate a diaphragm from at least one stack of diaphragms; a first visual device adapted to identify the separated diaphragm and a position of the separated diaphragm; a robot adapted to pick up the separated diaphragm under the vision guide of the first visual device; and a second visual device adapted to check whether the diaphragm picked up by the robot is a single diaphragm.

According to an exemplary embodiment of the present disclosure, the diaphragm separating device comprises: a diaphragm bin adapted to load at least one stack of diaphragms; and at least one set of diaphragm sweeping mechanism adapted to sweep a top of at least one stack of diaphragms, in order to separate a diaphragm from the top of at least one stack of diaphragms.

According to another exemplary embodiment of the present disclosure, when the diaphragm picked up by the robot comprises a plurality of overlapped diaphragms, the robot drops the picked up diaphragm back to the diaphragm bin.

According to another exemplary embodiment of the present disclosure, the system for feeding diaphragm further includes a diaphragm recycling container, wherein when the diaphragm picked up by the robot comprises the plurality of overlapped diaphragms, the robot puts the picked up diaphragm to the diaphragm recycling container.

According to another exemplary embodiment of the present disclosure, the system for feeding diaphragm further includes a third visual device configured to check whether the single diaphragm picked up by the robot is of right orientation and qualified shape.

According to another exemplary embodiment of the present disclosure, the system for feeding diaphragm further includes a waste recycling container configured to collect the single diaphragm with unqualified shape, wherein when the single diaphragm picked up by the robot is unqualified in the shape, the robot puts the picked up single diaphragm to the waste recycling container.

According to another exemplary embodiment of the present disclosure, the system for feeding diaphragm further includes a diaphragm kitting tray provided with a plurality of diaphragm positioning depressions, the single diaphragm being put to a corresponding diaphragm positioning depression.

According to another exemplary embodiment of the present disclosure, when the single diaphragm picked up by the robot is of right orientation and qualified shape, the robot puts the picked up diaphragm to a corresponding diaphragm positioning depression of the diaphragm kitting tray.

According to another exemplary embodiment of the present disclosure, the system for feeding diaphragm further includes a diaphragm flip-over mechanism adapted to flip over the diaphragm put thereon. When the single diaphragm picked up by the robot is of qualified shape but wrong orientation, the robot puts the picked up single diaphragm to the diaphragm flip-over mechanism to flip over the single diaphragm to the right orientation, and the robot picks up the single diaphragm that has been flipped over and puts the single diaphragm to a corresponding diaphragm positioning depression of the diaphragm kitting tray.

According to another exemplary embodiment of the present disclosure, each set of diaphragm sweeping mechanism comprises a support frame adapted to move back-and-forth in a straight line; and a sweeping brush mounted on the support frame and adapted to move back-and-forth along with the support frame, when the sweeping brush moves back-and-forth along with the support frame, the sweeping brush sweeps the top of at least one stack of diaphragms, in order to separate a single diaphragm from the top of at least one stack of diaphragms.

According to another exemplary embodiment of the present disclosure, a pair of sliding rails extending in a straight line is provided at both sides of the diaphragm bin, the support frame being slidably installed on a pair of sliding rails in order to move back-and-forth along the pair of sliding rails.

According to another exemplary embodiment of the present disclosure, the support frame includes: a pair of support vertical arms of which lower portions are slidably installed on the pair of sliding rails respectively; and a support transverse arm of which both ends are connected to upper portions of the pair of support vertical arms, wherein the sweeping brush is mounted on the support transverse arm.

According to another exemplary embodiment of the present disclosure, the support frame is configured to be height-adjustable, so that the sweeping brush installed on the support frame is height-adjustable to allow a height of the sweeping brush to be matched with diaphragm to be separated.

According to another exemplary embodiment of the present disclosure, the system for feeding diaphragm further includes at least one linear actuator each adapted to drive a corresponding set of diaphragm sweeping mechanism to move back-and-forth in a straight line.

According to the invention there is provided a method for feeding diaphragm, comprising the following steps:
S100: providing the above-mentioned system for feeding diaphragm;
S200: turning on the diaphragm separating device in order to separate a diaphragm from at least one stack of diaphragms;
S300: identifying the separated diaphragm and a position of the separated diaphragm by the first visual device;
S400: picking up the separated diaphragm by the robot based on the position information of the separated diaphragm that is identified by the first visual device;
S500: checking, by the second visual device, whether the diaphragm picked up by the robot is a single diaphragm;
   If the diaphragm picked up by the robot is a single one, then proceeding with the following step S600; and
   If the diaphragm picked up by the robot comprises a plurality of overlapped diaphragms, then putting the picked up diaphragms back to the diaphragms separating device or putting the picked up diaphragms to the diaphragm recycling container and going back to step S200;
S600: checking, by the third visual device 500, whether the single diaphragm picked up by the robot is of right orientation and qualified shape;
   If the single diaphragm picked up by the robot is of unqualified shape, then putting the single diaphragm to the waste recycling container;
   If the single diaphragm picked up by the robot is of qualified shape but wrong orientation, then perform the following step S700; and
   If the single diaphragm picked up by the robot is of right orientation and qualified shape, then putting the single diaphragm to a corresponding diaphragm positioning depression of the diaphragm kitting tray;
S700: flipping-over mechanism to flip over the single diaphragm to the right orientation by the diaphragm flip-over mechanism; and
S800: picking up the single diaphragm that has been flipped over to the right orientation and putting the single diaphragm to a corresponding diaphragm positioning depression of the diaphragm kitting tray by the robot.

In the above exemplary embodiments of the present disclosure, the diaphragm separating device may separate a single diaphragm from a stack of diaphragms by sweeping on top of the stack of diaphragms, improving efficiency and quality for separating a stack of diaphragms.

Other objectives and advantages of the present disclosure will become apparent from the following description of the present disclose when taken in conjunction with the accompanying drawings, and may give a comprehensive understanding of the present disclosure.

### BRIEF DESCRIPTION OF THE DRAWINGS

The above and other features of the present disclosure will become more apparent by describing in detail exemplary embodiments thereof with reference to the accompanying drawings, in which:
Fig. 1 shows an illustrative perspective view of a system for feeding diaphragm according to an exemplary embodiment of the present disclosure;
Fig. 2 shows a plan view of the system for feeding diaphragm as shown in Fig. 1;
Fig. 3 shows an illustrative perspective view of a diaphragm separating device of the system for feeding diaphragm as shown in Fig. 1; and
Fig. 4 shows a plan view of the diaphragm separating device as shown in Fig. 3.

### DETAILED DESCRIPTION OF PREFERRED EMBODIMENTS OF THE INVENTION

The technical solution of the present disclosure will be described hereinafter in further detail with reference to embodiment, taken in conjunction with the accompanying drawings. In the specification, the same or similar reference numerals indicate the same or similar parts. The description of the embodiments of the present disclosure hereinafter with reference to the accompanying drawings is intended to explain the general inventive concept of the present disclosure, and should not be constructed as a limitation to the present disclosure.

In addition, in the following detailed description, for the sake of explanation, numerous specific details are set forth in order to provide a thorough understanding of the disclosed embodiments. It will be apparent, however, one or more embodiments may also be practiced without these specific details. In other instances, well-known structures and devices are illustrated schematically in order to simplify the drawings.

According to the invention, there is provided a system for feeding diaphragm comprising: a diaphragm separating device adapted to separate a diaphragm from at least one stack of diaphragms; a first visual device adapted to identify the separated diaphragm and a position of the separated diaphragm; a robot adapted to pick up the separated diaphragm under the vision guide of the first visual device; and a second visual device adapted to identify whether the diaphragm picked up by the robot is a single diaphragm.

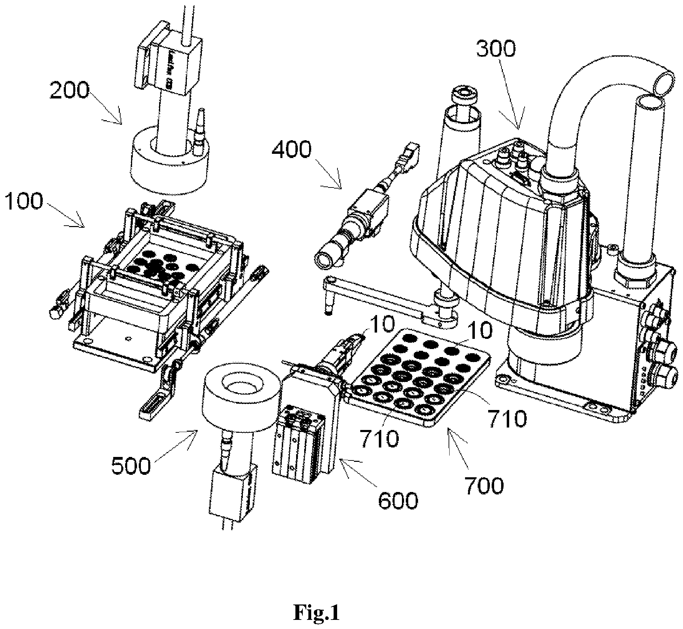

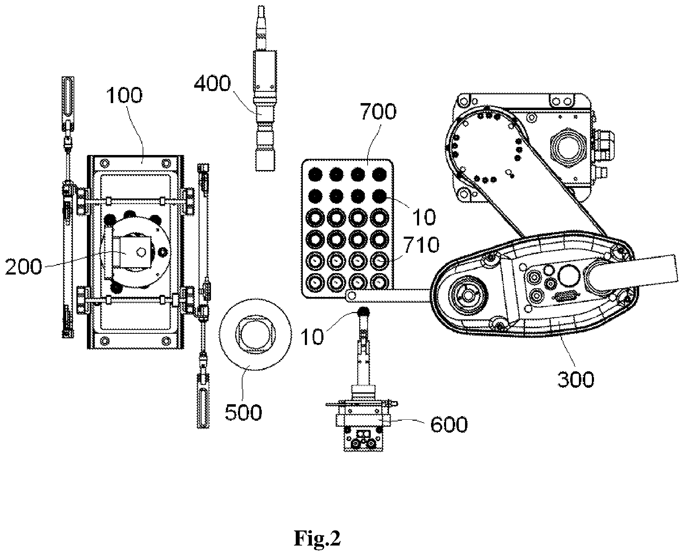

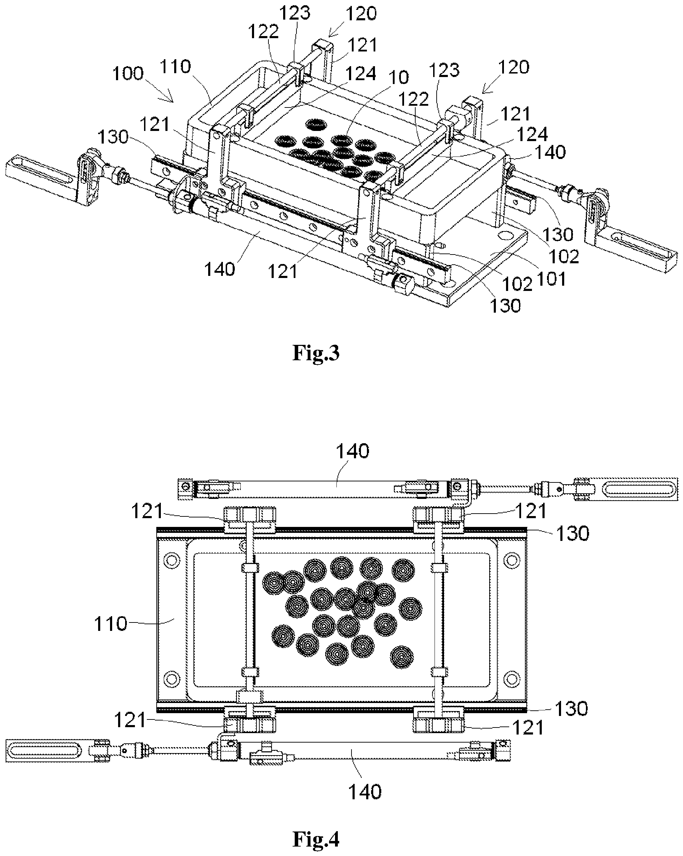

Fig. 1 shows an illustrative perspective view of a system for feeding diaphragm according to an exemplary embodiment of the present disclosure; Fig. 2 shows a plan view of the system for feeding diaphragm as shown in Fig. 1; Fig. 3 shows an illustrative perspective view of a diaphragm separating device of the system for feeding diaphragm as shown in Fig. 1; and Fig. 4 shows a plan view of the diaphragm separating device as shown in Fig. 3.

As shown in Figs. 1-2, in the illustrated embodiment, the system for feeding diaphragm mainly includes a diaphragm separating device 100, a first visual device 200, a robot 300 and a second visual device 400. The diaphragm separating device 100 is adapted to separate a diaphragm 10 from at least one stack of diaphragms 10. The first visual device 200 is used for identifying the separated diaphragm 10 and a position of the separated diaphragm 10. The robot 300 is adapted to pick up the separated diaphragm 10 under the vision guide of the first visual device 200. The second visual device 400 is used for checking whether the diaphragm 10 picked up by the robot 300 is a single diaphragm 10.

As shown in Figs. 1-2, in the illustrated embodiment, the robot 300 is constructed to shift the picked up diaphragm 10 to the second visual device 400 to check whether the diaphragm 10 picked up by the robot 300 is a single one.

As shown in Figs. 1-3, in an exemplary embodiment of the present disclosure, when the second visual device 400 identifies that the diaphragm 10 picked up by the robot 300 is not a single one, but many diaphragms overlapped, that is, when the diaphragm 10 picked up by the robot 300 comprises a plurality of overlapped diaphragms, the robot 300 may drop the picked up diaphragms 10 back to a diaphragm bin 110.

It should be appreciated by those skilled in the art that in an alternative exemplary embodiment of the present disclosure, the system for feeding diaphragm further comprises a diaphragm recycling container. When the second visual device 400 identifies that the diaphragm 10 picked up by the robot 300 is not a single one, but a plurality of overlapped diaphragms, that is, when the diaphragm 10 picked up by the robot 300 is the plurality of overlapped diaphragms, the robot 300 may put the picked up diaphragms 10 to the diaphragm recycling container.

As shown in Figs. 1-2, in the illustrated embodiment, the system for feeding diaphragm further includes a third visual device 500 configured for checking whether the orientation of the single diaphragm 10 picked up by the robot 300 is right and the shape of such single diaphragm 10 is qualified.

It should be appreciated by those skilled in the art that in an exemplary embodiment of the present disclosure, the system for feeding diaphragm may further includes a waste recycling container to collect the single diaphragm 10 with unqualified shape. When the third visual device 500 identifies that the single diaphragm 10 picked up by the robot 300 is not qualified in the shape, that is, when the single diaphragm 10 picked up by the robot 300 is not qualified in the shape, the robot 300 puts the picked up single diaphragm 10 to the waste recycling container.

As shown in Figs. 1-2, in the illustrated embodiment, the system for feeding diaphragm further includes a diaphragm kitting tray 700 provided with a plurality of diaphragm positioning depressions 710. A single diaphragm 10 is put to a corresponding diaphragm positioning depression 710.

As shown in Figs. 1-2, in the illustrated embodiment, when the third visual device 500 identifies that the single diaphragm 10 picked up by the robot 300 is of right orientation and qualified shape, that is, the single diaphragm 10 picked up by the robot 300 is of right orientation and qualified shape, the robot 300 puts the picked up single diaphragm 10 to a corresponding diaphragm positioning depression 710 of the diaphragm kitting tray 700.

As shown in Figs. 1-2, in the illustrated embodiment, the system for feeding diaphragm further includes a diaphragm flip-over mechanism 600 adapted to flip over the diaphragm 10 put thereon.

As shown in Figs. 1-2, in the illustrated embodiment, when the third visual device 500 identifies that the single diaphragm 10 picked up by the robot 300 is qualified in the shape but has wrong orientation, that is, the single diaphragm 10 picked up by the robot 300 is qualified in the shape but has wrong orientation, the robot 300 puts the picked up single diaphragm 10 to the diaphragm flip-over mechanism 600, in order to flip over the single diaphragm 10 to the right orientation. After the single diaphragm 10 is flipped over to the right orientation, the robot 300 further picks up the single diaphragm 10 that has been flipped over to the right orientation and puts it to a corresponding diaphragm positioning depression 710 of the diaphragm kitting tray 700.

As shown in Figs. 3-4, in the illustrated embodiment, the diaphragm separating device 100 mainly includes a diaphragm bin 110 and at least one set of diaphragm sweeping mechanism 120. The diaphragm bin 110 is constructed for loading at least one stack of diaphragms 10. In an embodiment of the present disclosure, interior bottom surface of the diaphragm bin 110 is flat, so that a stack of or stacks of diaphragms 10 may be placed and stacked on the interior bottom surface of the diaphragm bin 110. The at least one set of diaphragm sweeping mechanism 120 is adapted to sweep a top of at least one stack of diaphragms 10, in order to separate a diaphragm 10 from the top of at least one stack of diaphragms 10 and arrange the separated diaphragm 10 at a new position, so that the separated diaphragm 10 may be picked up by the robot 300.

As shown in Figs. 3-4, in the illustrated embodiment, each set of diaphragm sweeping mechanism 120 mainly includes a support frame 121, 122, 123 and a sweeping brush 124. The support frame 121, 122, 123 is adapted to move back-and-forth in a straight line for example, move reciprocally in a left-right direction in Fig. 4. The sweeping brush 124 is installed on the support frame 121, 122, 123 and adapted to move back-and-forth along with the support frame 121, 122, 123.

As shown in Figs. 3-4, in the illustrated embodiment, when moving back-and-forth along with the support frame 121, 122, 123, the sweeping brush 124 sweeps the top of at least one stack of diaphragms 10 in order to separate the diaphragm 10 from the top of at least one stack of diaphragms 10.

As shown in Figs. 3-4, in the illustrated embodiment, a pair of sliding rails 130, 130 are arranged on both sides of the diaphragm bin 110 and extend in a straight line parallel to the axis of the diaphragm bin 110. The support frame 121, 122, 123 is slidably installed on a pair of sliding rails 130, 130 so as to move reciprocally along a pair of sliding rails 130, 130.

As shown in Figs. 3-4, in the illustrated embodiment, the support frame 121, 122, 123 mainly includes a pair of support vertical arms 121, 121 and a support transverse arm 122. Lower portions of a pair of support vertical arms 121, 121 are slidably installed on a pair of sliding rails 130, 130, respectively. The support transverse arm 122 is connected both ends thereof to upper portions of a pair of support vertical arms 121, 121. The sweeping brush 124 is mounted on the support transverse arm 122.

As shown in Figs. 3-4, in the illustrated embodiment, the support frame 121, 122, 123 further includes a pair of brush connecting parts 123, 123, which is installed on the support transverse arm 122. The pair of brush connection parts 123, 123 is adapted to be connected to both ends of the sweeping brush 124, such that the sweeping brush 124 is installed in a suspending manner on the support transverse arm 122.

It should be appreciated by those skilled in the art that in an exemplary embodiment of the present disclosure, the support frame may be configured to be height-adjustable so that the sweeping brush installed on the support frame is height-adjustable, causing height of the sweeping brush matched with the diaphragm to be separated. For example, in practical application, if the diaphragm to be separated has a thinner thickness, a height of the sweeping brush is lowered; and if the diaphragm to be separated has a thicker thickness, the height of the sweeping brush is increased. In this way, the height of the sweeping brush may be matched with the diaphragm to be separated, improving efficiency of separating diaphragms.

As shown in Figs. 3-4, in the illustrated embodiment, the system for feeding diaphragm further includes at least one linear actuator 140each adapted to drive a corresponding set of diaphragm sweeping mechanism 120 to move back-and-forth in a straight line.

As shown in Figs. 3-4, in the illustrated embodiment, each linear actuator 140 is connected to one of two support vertical arms 121, 121 of the corresponding set of diaphragm sweeping mechanism 120, in order to drive the support vertical arms 121, 121 to move back-and-forth along the sliding rails 130, 130.

In an exemplary embodiment of the present disclosure, the linear actuator 140 may comprise a lead screw drive mechanism, an electrically controlled hydraulic cylinder or an electrically controlled cylinder.

As shown in Figs. 3-4, in the illustrated embodiment, the diaphragm separating device 100 comprises two sets of diaphragm sweeping mechanisms 120, 120, one set of diaphragm sweeping mechanism 120 being disposed at one side of the diaphragm bin 110, and the other set of diaphragm sweeping mechanism 120 being disposed at the other side of the diaphragm bin 110.

As shown in Figs. 3-4, in the illustrated embodiment, the system for feeding diaphragm comprises two linear actuators 140, 140, one linear actuator 140 being disposed at one side of the diaphragm bin 110 for driving one set of diaphragm sweeping mechanism 120, and the other linear actuator 140 being disposed at the other side of the diaphragm bin 110 for driving the other set of diaphragm sweeping mechanism 120.

As shown in Fig. 3, in the illustrated embodiment, the system for feeding diaphragm further includes a mounting base 101, on which the diaphragm bin 110 and the pair of sliding rails 130, 130 are mounted.

As shown in Fig. 3, in the illustrated embodiment, the mounting base 101 is provided with a pair of upright support walls 102, 102. The diaphragm bin 110 is mounted on tops of the pair of upright support walls 102, 102, and the pair of sliding rails 130, 130 is mounted outside the pair of upright support walls 102, 102, respectively.

According to the invention, further disclosed is a method for feeding diaphragm, comprising steps of:
S100: providing the above-mentioned system for feeding diaphragm;
S200: turning on the diaphragm separating device 100 in order to separate a diaphragm 10 from at least one stack of diaphragms 10;
S300: identifying the separated diaphragm 10 and a position of the separated diaphragm 10 by the first visual device 200;
S400: picking up the separated diaphragm 10 by the robot 300 based on the position information of the separated diaphragm 10 that is identified by the first visual device 200;
S500: checking, by the second visual device 400, whether the diaphragm 10 picked up by the robot 300 is a single diaphragm 10;
   If the diaphragm 10 picked up by the robot 300 is a single one, then proceeding with the following step S600; and
   If the diaphragm 10 picked up by the robot 300 is a plurality of overlapped diaphragms, then putting the picked up diaphragms 10 back to the diaphragm separating device 100 or putting the picked up diaphragms 10 to the diaphragm recycling container and going back to step S200;
S600: checking, by the third visual device 500, whether the single diaphragm 10 picked up by the robot 300 is of right orientation and qualified shape;
   If the single diaphragm 10 picked up by the robot 300 is of unqualified shape, then putting the single diaphragm 10 directly to the waste recycling container;
   If the single diaphragm 10 picked up by the robot 300 is of qualified shape but wrong orientation, then performing the following step S700; and
   If the single diaphragm 10 picked up by the robot 300 is of right orientation and qualified shape, then putting the single diaphragm 10 directly to a corresponding diaphragm positioning depression 710 of the diaphragm kitting tray 700;
S700: flipping over the single diaphragm 10 to the right orientation by the diaphragm flip-over mechanism 600; and
S800: picking up the single diaphragm 10 that has been flipped over to the right orientation and putting the single diaphragm 10 to a corresponding diaphragm positioning depression 710 of the diaphragm kitting tray 700 by the robot 300.

## Claims

1. A system for feeding diaphragm, **characterized in that** the system for feeding diaphragm comprises:
a diaphragm separating device (100) adapted to separate a diaphragm (10) from at least one stack of diaphragms (10);
a first visual device (200) adapted to identify the separated diaphragm (10) and a position of the separated diaphragm (10);
a robot (300) adapted to pick up the separated diaphragm (10) under the vision guide of the first visual device (200), **characterized by**
a second visual device (400) adapted to check whether the diaphragm (10) picked up by the robot (300) is a single diaphragm (10).

2. The system for feeding diaphragm according to claim 1, wherein,
the diaphragm separating device (100) comprises:
a diaphragm bin (110) adapted to load at least one stack of diaphragms (10); and
at least one set of diaphragm sweeping mechanism (120) adapted to sweep a top of at least one stack of diaphragms (10), in order to separate a diaphragm (10) from the top of at least one stack of diaphragms (10).

3. The system for feeding diaphragm according to claim 2, wherein the system is adapted to, when the diaphragm (10) picked up by the robot (300) comprises a plurality of overlapped diaphragms (10), the robot (300) drops the picked up diaphragm (10) back to the diaphragm bin (110).

4. The system for feeding diaphragm according to claim 3, further including a diaphragm recycling container and being adapted to,
when the diaphragm (10) picked up by the robot (300) comprises the plurality of overlapped diaphragms, the robot (300) puts the picked up diaphragms (10) to a diaphragm recycling container.

5. The system for feeding diaphragm according to claim 2, further including a third visual device (500) configured to check whether the diaphragm (10) picked up by the robot (300) is of right orientation and qualified shape.

6. The system for feeding diaphragm according to claim 5, further including a waste recycling container configured to collect the single diaphragm (10) with unqualified shape; wherein the system is adapted to, when the single diaphragm (10) picked up by the robot (300) is of unqualified shape, the robot (300) puts the picked up single diaphragm (10) to the waste recycling container.

7. The system for feeding diaphragm according to claim 5, further including a diaphragm kitting tray (700) provided with a plurality of diaphragm positioning depressions (710),
wherein the single diaphragm (10) is put to a corresponding diaphragm positioning depression (710).

8. The system for feeding diaphragm according to claim 7, wherein the system is adapted to, when the single diaphragm (10) picked up by the robot (300) is of right orientation and qualified shape, the robot (300) puts the picked up diaphragm (10) to a corresponding diaphragm positioning depression (710) of the diaphragm kitting tray (700).

9. The system for feeding diaphragm according to claim 7, further including a diaphragm flip-over mechanism (600) adapted to flip over the diaphragm (10) put thereon,
wherein the system is adapted to, when the single diaphragm (10) picked up by the robot (300) is of qualified shape but wrong orientation, the robot (300) puts the picked up single diaphragm (10) to the diaphragm flip-over mechanism (600) to flip over the single diaphragm (10) to the right orientation, and the robot (300) picks up the single diaphragm (10) that has been flipped over and puts the single diaphragm to a corresponding diaphragm positioning depression (710) of the diaphragm kitting tray (700).

10. The system for feeding diaphragm according to claim 2, wherein,
each set of diaphragm sweeping mechanism (120) comprises:
a support frame (121, 122, 123) adapted to move reciprocally in a straight line; and
a sweeping brush (124) mounted on the support frame (121, 122, 123) and adapted to move reciprocally along with the support frame (121, 122, 123),
wherein when the sweeping brush (124) moves reciprocally along with the support frame (121, 122, 123), the sweeping brush (124) sweeps the top of at least one stack of diaphragms (10), in order to separate a single diaphragm (10) from the top of at least one stack of diaphragms (10).

11. The system for feeding diaphragm according to claim 10, wherein,
a pair of sliding rails (130, 130) extending in a straight line is provided at both sides of the diaphragm bin (110), the support frame (121, 122, 123) being slidably installed on the pair of sliding rails (130, 130) in order to move reciprocally along the pair of sliding rails (130, 130).

12. The system for feeding diaphragm according to claim 11, wherein,
the support frame (121, 122, 123) includes:
a pair of support vertical arms (121, 121) of which lower portions are slidably installed on the pair of sliding rails (130, 130), respectively; and
a support transverse arm (122) of which both ends are connected to upper portions of the pair of support vertical arms (121, 121), the sweeping brush (124) being mounted on the support transverse arm (122).

13. The system for feeding diaphragm according to claim 10, wherein,
the support frame (121, 122, 123) is configured to be height-adjustable, so that the sweeping brush (124) installed on the support frame (121, 122, 123) is height-adjustable to allow a height of the sweeping brush (124) to be matched with diaphragm (10) to be separated.

14. The system for feeding diaphragm according to claim 2, further including at least one linear actuator (140) each adapted to drive a corresponding set of diaphragm sweeping mechanism to move reciprocally in a straight line.

15. A method for feeding diaphragm, **characterized in that** the method for feeding diaphragm comprises steps of:
S100: providing the system for feeding diaphragm according to any one of claims 1-14;
S200: turning on the diaphragm separating device (100) in order to separate a diaphragm (10) from at least one stack of diaphragms (10);
S300: identifying the separated diaphragm (10) and a position of the separated diaphragm (10) by the first visual device (200) ;
S400: picking up the separated diaphragm (10) by the robot based on the position information of the separated diaphragm (10) that is identified by the first visual device (200), **characterized by** the following steps:
S500: checking, by the second visual device (400), whether the diaphragm (10) picked up by the robot (300) is a single diaphragm;
if the diaphragm (10) picked up by the robot (300) is a single one, then proceeding with the following step S600; and
if the diaphragm (10) picked up by the robot (300) comprises a plurality of overlapped diaphragms, then putting the picked up diaphragms (10) back to a diaphragm separating device (100) or putting the picked up diaphragms (10) to a diaphragm recycling container and going back to step S200;
S600: checking, by a third visual device (500), whether the single diaphragm (10) picked up by the robot (300) is of right orientation and qualified shape;
if the single diaphragm (10) picked up by the robot (300) is of unqualified shape, then putting the single diaphragm to a waste recycling container; if the single diaphragm (10) picked up by the robot (300) is of qualified shape but wrong orientation, then perform the following step S700; and if the single diaphragm (10) picked up by the robot (300) is of right orientation and qualified shape, then putting the single diaphragm to a corresponding diaphragm positioning depression (710) of a diaphragm kitting tray (700);
S700: flipping over the single diaphragm (10) to the right orientation by a diaphragm flip-over mechanism (600); and
S800: picking up the single diaphragm (10) that has been flipped over to the right orientation and putting the single diaphragm to a corresponding diaphragm positioning depression (710) of the diaphragm kitting tray (700) by the robot.

## Patentansprüche

1. System zum Zuführen von Membran, **dadurch gekennzeichnet, dass** das System zum Zuführen von Membran umfasst:
eine zum Trennen einer Membran (10) von wenigstens einem Stapel von Membranen (10) angepasste Membrantrennvorrichtung (100);
eine zum Identifizieren der getrennten Membran (10) und einer Position der getrennten Membran (10) angepasste erste optische Vorrichtung (200);
einen zum Aufnehmen der getrennten Membran (10) unter optischer Führung der ersten optischen Vorrichtung (200) angepassten Roboter (300), **gekennzeichnet durch** eine zum Prüfen, ob die vom Roboter (300) aufgenommene Membran (10) eine einzelne Membran (10) ist, angepasste zweite optische Vorrichtung (400).

2. System zum Trennen von Membran nach Anspruch 1, wobei die Membrantrennvorrichtung (100) umfasst:
einen zum Laden von wenigstens einem Stapel von Membranen (10) angepassten Membranbehälter (110); und
wenigstens eine Menge eines zum Abstreifen einer Oberseite von wenigstens einem Stapel von Membranen (10) zum Trennen einer Membran (10) von der Oberseite von wenigstens einem Stapel von Membranen (10) angepassten Membranabstreifmechanismus (120).

3. System zum Zuführen von Membran nach Anspruch 2, wobei das System angepasst ist, dass, wenn die vom Roboter (300) aufgenommene Membran (10) eine Vielzahl von überlappenden Membranen (10) umfasst, der Roboter (300) die aufgenommene Membran (10) wieder in den Membranbehälter (110) fallen lässt.

4. System zum Zuführen von Membran nach Anspruch 3, ferner umfassend einen Membranrecyclingbehälter und angepasst, dass
wenn die vom Roboter (300) aufgenommene Membran (10) die Vielzahl von überlappenden Membranen umfasst, der Roboter (300) die aufgenommenen Membranen (10) in einen Membranrecyclingbehälter legt.

5. System zum Zuführen von Membran nach Anspruch 2, ferner umfassend eine zum Prüfen, ob die vom Roboter (300) aufgenommene Membran (10) die richtige Ausrichtung und geeignete Form aufweist, ausgebildete dritte optische Vorrichtung (500).

6. System zum Zuführen von Membran nach Anspruch 5, ferner umfassend einen zum Sammeln der einzelnen Membran (10) mit ungeeigneter Form ausgebildeten Abfallrecyclingbehälter,
wobei das System angepasst ist, dass, wenn die vom Roboter (300) aufgenommene einzelne Membran (10) eine ungeeignete Form aufweist, der Roboter (300) die aufgenommene einzelne Membran (10) in den Abfallrecyclingbehälter legt.

7. System zum Zuführen von Membran nach Anspruch 5, ferner umfassend ein mit einer Vielzahl von Membrananordnungsvertiefungen (710) ausgestattetes Membranbereitstellungstablett (700),
wobei die einzelne Membran (10) in eine entsprechende Membrananordnungsvertiefung (710) gesetzt wird.

8. System zum Zuführen von Membran nach Anspruch 7, wobei das System angepasst ist, dass, wenn die vom Roboter (300) aufgenommene einzelne Membran (10) die richtige Ausrichtung und eine geeignete Form aufweist, der Roboter (300) die aufgenommene Membran (10) in eine entsprechende Membrananordnungsvertiefung (710) des Membranbereitstellungstabletts (700) setzt.

9. System zum Zuführen von Membran nach Anspruch 7, ferner umfassend einen zum Umdrehen der darauf gesetzten Membran (10) angepassten Membranumdrehmechanismus (600),
wobei das System angepasst ist, dass, wenn die vom Roboter (300) aufgenommene einzelne Membran (10) eine geeignete Form aufweist, aber die falsche Ausrichtung, der Roboter (300) die aufgenommene einzelne Membran (10) auf den Membranumdrehmechanismus (600) setzt, um die einzelne Membran (10) in die richtige Ausrichtung umzudrehen, und der Roboter (300) die einzelne Membran (10) aufnimmt, die umgedreht wurde, und die einzelne Membran in eine entsprechende Membrananordnungsvertiefung (710) des Membranbereitstellungstabletts (700) setzt.

10. System zum Zuführen von Membran nach Anspruch 2, wobei jede Menge eines Membranabstreifmechanismus (120) umfasst:
einen zum wechselseitigen Bewegen in einer geraden Linie angepassten Stützrahmen (121, 122, 123); und eine am Stützrahmen (121, 122, 123) montierte und zum wechselseitigen Bewegen entlang des Stützrahmens (121, 122, 123) angepasste Abstreifbürste (124), wobei, wenn sich die Abstreifbürste (124) wechselseitig entlang des Stützrahmens (121, 122, 123) bewegt, die Abstreifbürste (124) die Oberseite von wenigstens einem Stapel von Membranen (10) abstreift, um eine einzelne Membran (10) von der Oberseite von wenigstens einem Stapel von Membranen (10) zu trennen.

11. System zum Zuführen von Membran nach Anspruch 10, wobei
ein Paar von sich in einer geraden Linie erstreckenden Gleitschienen (130, 130) an beiden Seiten des Membranbehälters (110) angeordnet ist, wobei der Stützrahmen (121, 122, 123) gleitend auf dem Paar von Gleitschienen (130, 130) installiert ist, um sich wechselseitig entlang des Paars von Gleitschienen (130, 130) zu bewegen.

12. System zum Zuführen von Membran nach Anspruch 11, wobei der Stützrahmen (121, 122, 123) umfasst:
ein Paar von vertikalen Stützarmen (121, 121), von denen untere Abschnitte jeweils gleitend auf dem Paar von Gleitschienen (130, 130) installiert sind; und
einen horizontalen Stützarm (122), vom dem beide Enden mit oberen Abschnitten des Paars von vertikalen Stützarmen (121, 121) verbunden sind, wobei die Abstreifbürste (124) auf dem horizontalen Stützarm (122) montiert ist.

13. System zum Zuführen von Membran nach Anspruch 10, wobei
der Stützrahmen (121, 122, 123) höhenverstellbar ausgebildet ist, so dass die auf dem Stützrahmen (121, 122, 123) installierte Abstreifbürste (124) höhenverstellbar ist, um ein Anpassen einer Höhe der Abstreifbürste (124) an die zu trennende Membran (10) zu ermöglichen.

14. System zum Zuführen von Membran nach Anspruch 2, ferner umfassend wenigstens einen jeweils zum Antreiben einer entsprechenden Menge eines Membranabstreifmechanismus zum wechselseitigen Bewegen in einer geraden Linie angepassten Linearstellantrieb (140).

15. Verfahren zum Zuführen von Membran, **dadurch gekennzeichnet, dass** das Verfahren zum Zuführen von Membran Schritte umfasst zum:
S100: Bereitstellen des Systems zum Zuführen von Membran nach einem der Ansprüche 1-14;
S200: Einschalten der Membrantrennvorrichtung (100) zum Trennen einer Membran (10) von wenigstens einem Stapel von Membranen (10);
S300: Identifizieren der getrennten Membran (10) und einer Position der getrennten Membran (10) durch die erste optische Vorrichtung (200);
S400: Aufnehmen der getrennten Membran (10) durch den Roboter auf der Basis der Positionsinformation der getrennten Membran (10), die von der ersten optischen Vorrichtung (200) identifiziert ist, **gekennzeichnet durch** die folgenden Schritte:
S500: Prüfen durch die zweite optische Vorrichtung (400), ob die vom Roboter (300) aufgenommene Membran (10) eine einzelne Membran ist;
wenn die vom Roboter (300) aufgenommene Membran (10) eine einzelne ist, Fortfahren mit dem folgenden Schritt S600; und
wenn die vom Roboter (300) aufgenommene Membran (10) eine Vielzahl von überlappenden Membranen umfasst, Zurückgeben der aufgenommenen Membranen (10) an eine Membrantrennvorrichtung (100) oder Legen der aufgenommenen Membranen (10) in einen Membranrecyclingbehälter und Zurückkehren zu Schritt S200;
S600: Prüfen durch die dritte optische Vorrichtung (500), ob die vom Roboter (300) aufgenommene einzelne Membran (10) die richtige Ausrichtung und eine geeignete Form aufweist;
wenn die vom Roboter (300) aufgenommene einzelne Membran (10) eine ungeeignete Form aufweist, Legen der einzelnen Membran in einen Abfallrecyclingbehälter;
wenn die vom Roboter (300) aufgenommene einzelne Membran (10) eine geeignete Form aufweist, aber die falsche Ausrichtung, Durchführen des folgenden Schritts S700; und
wenn die vom Roboter (300) aufgenommene einzelne Membran (10) die richtige Ausrichtung und eine geeignete Form aufweist, Setzen der einzelnen Membran in eine entsprechende Membrananordnungsvertiefung (710) eines Membranbereitstellungstabletts (700);
S700: Umdrehen der einzelnen Membran (10) in die richtige Ausrichtung durch einen Membranumdrehmechanismus (600); und
S800: Aufnehmen der einzelnen Membran (10), die in die richtige Ausrichtung umgedreht wurde, und Setzen der einzelnen Membran in eine entsprechende Membrananordnungsvertiefung (710) des Membranbereitstellungstabletts (700) durch den Roboter.

## Revendications

1. Système de délivrance de diaphragme, **caractérisé en ce que** le système de délivrance de diaphragme comprend :
un dispositif de séparation de diaphragme (100) conçu pour séparer un diaphragme (10) à partir d'au moins une pile de diaphragmes (10),
un premier dispositif de visualisation (200) conçu pour identifier le diaphragme (10) séparé et la position du diaphragme (10) séparé,
un robot (300) conçu pour prélever le diaphragme (10) séparé grâce au guidage par vision du premier dispositif de visualisation (200), **caractérisé par** :
un deuxième dispositif de visualisation (400) conçu pour contrôler si le diaphragme (10) prélevé par le robot (300) est un diaphragme (10) unique.

2. Système de délivrance de diaphragme selon la revendication 1, dans lequel
l'appareil de séparation de diaphragme (100) comprend :
un casier pour diaphragmes (110) conçu pour charger au moins une pile de diaphragmes (10), et
au moins un jeu de mécanismes de nettoyage de diaphragme (120) conçu pour nettoyer le sommet d'au moins une pile de diaphragmes (10) dans le but de séparer un diaphragme (10) du sommet d'au moins une pile de diaphragmes (10).

3. Système de délivrance de diaphragme selon la revendication 2, dans lequel le système est conçu, lorsque le diaphragme (10) prélevé par le robot (300) comprend une pluralité de diaphragmes (10) qui se chevauchent, pour que le robot (300) fasse chuter le diaphragme (10) prélevé jusqu'au casier pour diaphragmes (110).

4. Système de délivrance de diaphragme selon la revendication 3, incluant en outre un conteneur de recyclage de diaphragmes conçu :
lorsque le diaphragme (10) prélevé par le robot (300) comprend la pluralité de diaphragmes qui se chevauchent, pour que le robot (300) place les diaphragmes (10) prélevés dans un conteneur de recyclage de diaphragmes.

5. Système de délivrance de diaphragme selon la revendication 2, incluant en outre un troisième dispositif de visualisation (500) configuré pour contrôler si le diaphragme (10) prélevé par le robot (300) présente une orientation normale et une forme qualifiée.

6. Système de délivrance de diaphragme selon la revendication 5, incluant en outre un conteneur de recyclage de déchets configuré pour collecter les diaphragmes (10) uniques présentant une forme non qualifiée,
dans lequel le système est conçu, lorsque le diaphragme (10) unique prélevé par le robot (300) présente une forme non qualifiée, pour que le robot (300) place le diaphragme (10) unique prélevé dans le conteneur de recyclage de déchets.

7. Système de délivrance de diaphragme selon la revendication 5, incluant en outre un plateau de préparation de diaphragmes (700) doté d'une pluralité de cuvettes de positionnement de diaphragme (710),
dans lequel le diaphragme (10) unique est placé dans une cuvette correspondante de positionnement de diaphragme (710) .

8. Système de délivrance de diaphragme selon la revendication 7, le système étant conçu, lorsque le diaphragme (10) unique prélevé par le robot (300) présente une orientation normale et une forme qualifiée, pour que le robot (300) place le diaphragme (10) prélevé dans une cuvette correspondante de positionnement de diaphragme (710) du plateau de préparation de diaphragmes (700).

9. Système de délivrance de diaphragme selon la revendication 7, incluant en outre un mécanisme de retournement de diaphragme (600) conçu pour retourner le diaphragme (10) placé sur lui,
dans lequel le système est conçu, lorsque le diaphragme (10) unique prélevé par le robot (300) est de forme qualifiée mais de mauvaise orientation, pour que le robot (300) place le diaphragme (10) unique prélevé sur le mécanisme de retournement de diaphragme (600) afin de retourner le diaphragme (10) unique dans la bonne orientation, et le robot (300) prélève le diaphragme (10) unique qui était retourné et place le diaphragme unique dans une cuvette correspondante de positionnement de diaphragme (110) du plateau de préparation de diaphragmes (700).

10. Système de délivrance de diaphragme selon la revendication 2, dans lequel :
chaque jeu de mécanismes de nettoyage de diaphragme (120) comprend :
un châssis de support (121, 122, 123) conçu pour se déplacer en va-et-vient selon une ligne droite, et
une brosse de nettoyage (124) montée sur le châssis de support (121, 122, 123) et conçue pour se déplacer en va-et-vient en même temps que le châssis de support (121, 122, 123),
dans lequel, lorsque la brosse de nettoyage (124) se déplace en va-et-vient en même temps que le châssis de support (121, 122, 123), la brosse de nettoyage (124) nettoie le sommet d'au moins une pile de diaphragmes (10) dans le but de séparer un diaphragme (10) unique du sommet de la ou des piles de diaphragmes (10).

11. Système de délivrance de diaphragme selon la revendication 10, dans lequel :
une paire de rails de coulissement (130, 130), se déployant en ligne droite, est disposée des deux côtés du casier pour diaphragmes (110), le châssis de support (121, 122, 123) étant installé pour pouvoir coulisser sur la paire de rails de coulissement (130, 130) afin de se déplacer en va-et-vient le long de la paire de rails de coulissement (130, 130).

12. Système de délivrance de diaphragme selon la revendication 11, dans lequel :
le châssis de support (121, 122, 123) inclut :
une paire de bras verticaux de support (121, 121) dont les parties inférieures sont installées pour pouvoir coulisser respectivement sur la paire de rails de coulissement (130, 130), et
un bras transversal de support (122) dont les deux extrémités sont reliées aux parties supérieures de la paire de bras verticaux de support (121, 121), la brosse de nettoyage (124) étant montée sur le bras transversal de support (122).

13. Système de délivrance de diaphragme selon la revendication 10, dans lequel :
le châssis de support (121, 122, 123) est configuré pour être ajustable en hauteur de sorte à ce que la brosse de nettoyage (124), installée sur le châssis de support (121, 122, 123), soit ajustable en hauteur afin de faire correspondre la hauteur de la brosse de nettoyage (124) au diaphragme (10) à séparer.

14. Système de délivrance de diaphragme selon la revendication 2, incluant en outre au moins un actionneur linéaire (140) conçu pour entraîner un jeu correspondant de mécanismes de nettoyage de diaphragme à déplacer en va-et-vient selon une ligne droite.

15. Procédé permettant de délivrer un diaphragme, **caractérisé en ce que** le procédé de délivrance d'un diaphragme comprend les étapes suivantes :
S100 : la fourniture du système permettant de délivrer un diaphragme conforme à l'une quelconque des revendications 1 à 14,
S200 : l'activation du dispositif de séparation de diaphragme (100) afin de séparer un diaphragme (10) d'au moins une pile de diaphragmes (10),
S300 : l'identification du diaphragme (10) séparé et de la position du diaphragme (10) séparé grâce au premier dispositif de visualisation (200),
S400 : le prélèvement du diaphragme (10) séparé par le robot sur la base des informations de position du diaphragme (10) séparé qui est identifié par le premier dispositif de visualisation (200), **caractérisé par** les étapes suivantes :
S500 : le contrôle, par le deuxième dispositif de visualisation (400), de ce que le diaphragme (10) prélevé par le robot (300) est un diaphragme unique,
si le diaphragme (10) prélevé par le robot (300) est unique, alors poursuite à l'étape S600 suivante, et
si le diaphragme (10) prélevé par le robot (300) comprend une pluralité de diaphragmes se chevauchant, alors placement des diaphragmes (10) prélevés dans un dispositif de séparation de diaphragme (100) ou bien placement des diaphragmes (10) prélevés dans un conteneur de recyclage de diaphragmes, et
retour à l'étape S200,
S600 : le contrôle, par le troisième dispositif de visualisation (500) de ce que le diaphragme (10) unique prélevé par le robot (300) présente une orientation normale et une forme qualifiée,
si le diaphragme (10) prélevé par le robot (300) présente une forme non qualifiée, alors placement du diaphragme unique dans un conteneur de recyclage de déchets,
si le diaphragme (10) unique prélevé par le robot (300) présente une forme qualifiée mais une mauvaise orientation, alors exécution de l'étape S700 suivantes, et
si le diaphragme (10) unique prélevé par le robot (300) présente une orientation normale et une forme qualifiée, alors placement du diaphragme unique dans une cuvette correspondante de positionnement de diaphragme (710) d'un plateau de préparation de diaphragmes (700),
S700 : le retournement du diaphragme (10) unique dans l'orientation normale grâce à un mécanisme de retournement de diaphragme (600), et
S800 : le prélèvement du diaphragme (10) unique qui a été retourné dans l'orientation normale et le placement du diaphragme unique dans une cuvette correspondant de positionnement de diaphragme (710) du plateau de préparation (700) par le robot.
